# EUROPEAN PATENT APPLICATION

(11) **EP 3 301 744 A1**
(43) Date of publication of application: **04.04.2018**
(21) Application number: 16201869.1
(22) Date of filing: 02.12.2016
(51) Int. Cl.: H01M 4/38, H01M 10/052, H01M 10/0561, H01M 10/0567, H01M 4/48, H01M 4/58, H01M 6/14

(54) **ELECTROLYTE SOLUTION CONTAINING IODIDE ADDITIVES AND SULFUR DIOXIDE-BASED SECONDARY BATTERY INCLUDING THE SAME**

(30) Priority: 29.09.2016 KR 20160125466
(71) Applicant: Korea Electronics Technology Institute, Seongnam-si, Gyeonggi-do 13509 (KR)
(72) Inventor: JEONG, Goojin, 13599 Gyeonggi-do (KR); KIM, Youngjun, 13525 Gyeonggi-do (KR); KIM, Hansu, 07214 Seoul (KR)
(74) Representative: TBK

(57) **Abstract**

The present invention relates to an electrolyte solution containing an iodide additive, and a sulfur dioxide-based secondary battery including the same. An electrolyte solution for a sulfur dioxide-based secondary battery according to the present invention includes sulfur dioxide (SO₂), an alkali metal salt, and an iodide additive. An iodide additive is added to an electrolyte solution, and thus energy efficiency, a long-life characteristic, and stability of a negative electrode of a sulfur dioxide-based secondary battery can be improved.

## Description

### [Technical Field]

The present invention relates to a secondary battery, and more specifically, to an electrolyte solution containing an iodide additive that can improve energy efficiency, a long-life characteristic, and stability of a negative electrode, and a sulfur dioxide-based secondary battery including the same.

### [Background Art]

As the needs of consumers have changed due to digitalization and high performance of electronic products, and the like, market demand is being changed to the development of batteries that are thin, lightweight, and have a high capacity according to a high energy density. Also, in order to address future energy and environment problems, the development of hybrid electric vehicles, electric vehicles, and fuel cell vehicles is actively progressing, and there is a demand for a large-sized battery for vehicle power.

Lithium-based secondary batteries have been put to practical use as batteries that can be reduced in size and weight and can be charged and discharged in a high capacity, and have been used in portable electronic devices and communication devices such as small video cameras, mobile phones, notebook PCs, and the like. A lithium-based secondary battery is composed of a positive electrode, a negative electrode, and an electrolyte. Since lithium ions released from a positive electrode active material when charging is performed serve to transfer energy by being inserted into a negative electrode active material and being desorbed again when discharging is performed, i.e., by shuttling between both electrodes, a lithium-based secondary battery can be charged and discharged.

Meanwhile, research on a sodium-based secondary battery using sodium instead of lithium has recently been in focus again. Since sodium is an abundant resource, when a secondary battery using sodium instead of lithium is manufactured, it is possible to manufacture the secondary battery at a low cost.

As such, a sodium-based secondary battery is useful, but a conventional sodium metal-based secondary battery, for example, NAS (Na-S battery) and ZEBRA (Na-NiCl₂ battery), is unable to be used at room temperature. That is, there are problems such as battery safety due to the use of liquid-phase sodium and a positive electrode active material at high temperature and deterioration in battery performance due to corrosion. Recently, research on a sodium ion battery using deintercalation of sodium ions has been actively progressing, but their energy density and lifetime characteristic are still poor. Therefore, there is a demand for a sodium-based secondary battery that can be used at room temperature and has excellent energy density and lifetime characteristic.

### [Prior-Art Document]

### [Patent Document]

Korean Patent No. 10-1520606 (May 11, 2015)

### [Disclosure]

### [Technical Problem]

The present invention is directed to providing an electrolyte solution containing an iodide additive that can improve energy efficiency, a long-life characteristic, and stability of a negative electrode, and a sulfur dioxide-based secondary battery including the same.

### [Technical Solution]

One aspect of the present invention provides an electrolyte solution for a sulfur dioxide-based secondary battery, which includes sulfur dioxide (SO₂), an alkali metal salt, and an iodide additive.

The iodide additive may be NaI or LiI.

A content of the iodide additive may be 0.001 to 0.5 M, and preferably, 0.03 to 0.1 M.

The sulfur dioxide and the alkali metal salt may be included as NaAlCl₄-xSO₂ (1.5≤x≤3.0) or LiAlCl₄-xSO₂ (1.5≤x≤3.0).

Another aspect of the present invention provides a sulfur dioxide-based secondary battery which includes an electrolyte solution containing sulfur dioxide (SO₂), an alkali metal salt, and an iodide additive.

Still another aspect of the present invention provides a sulfur dioxide-based secondary battery which includes a negative electrode containing sodium or lithium; a positive electrode containing a carbon material; and an electrolyte solution containing sulfur dioxide (SO₂), an alkali metal salt, and an iodide additive.

The negative electrode may be a sodium metal or a lithium metal.

### [Advantageous Effects]

According to the present invention, an iodide additive is added to a sulfur dioxide-based inorganic electrolyte solution, and thus energy efficiency, a long-life characteristic, and stability of a negative electrode can be improved.

### [Description of Drawings]

FIG. 1 is a diagram for describing a sulfur dioxide-based secondary battery including an electrolyte solution containing an iodide additive according to the present invention.
FIG. 2 is an image illustrating ionic conductivity of an electrolyte solution containing NaI.
FIG. 3 is a graph illustrating the charging and discharging curves of sulfur dioxide-based secondary batteries according to examples and a comparative example.
FIG. 4 is a graph illustrating a lifetime characteristic of sulfur dioxide-based secondary batteries according to examples and a comparative example.
FIG. 5 is an image illustrating an electrodeposited form of a negative electrode in a sulfur dioxide-based secondary battery according to a comparative example.
FIG. 6 is an image illustrating an electrodeposited form of a negative electrode in a sulfur dioxide-based secondary battery according to an example.

### [Modes of the Invention]

It should be noted that the following detailed descriptions merely provide parts necessary to understand embodiments of the present invention and the other descriptions of the present invention are omitted within a range within which the gist of the present invention is not obscured.

Terms or words used herein shall not be limited to common or dictionary meanings, and have meanings corresponding to technical aspects of the embodiments of the present invention so as to most suitably describe the embodiments of the present invention. Accordingly, the configurations shown in the drawings and embodiments disclosed in the present specification are merely preferred embodiments of the present invention and do not represent the full technical spirit of the present invention. Therefore, it should be understood that various equivalents and modifications may be present at a filing time of the present application.

Hereinafter, embodiments of the present invention will be described in more detail with reference to the accompanying drawings.

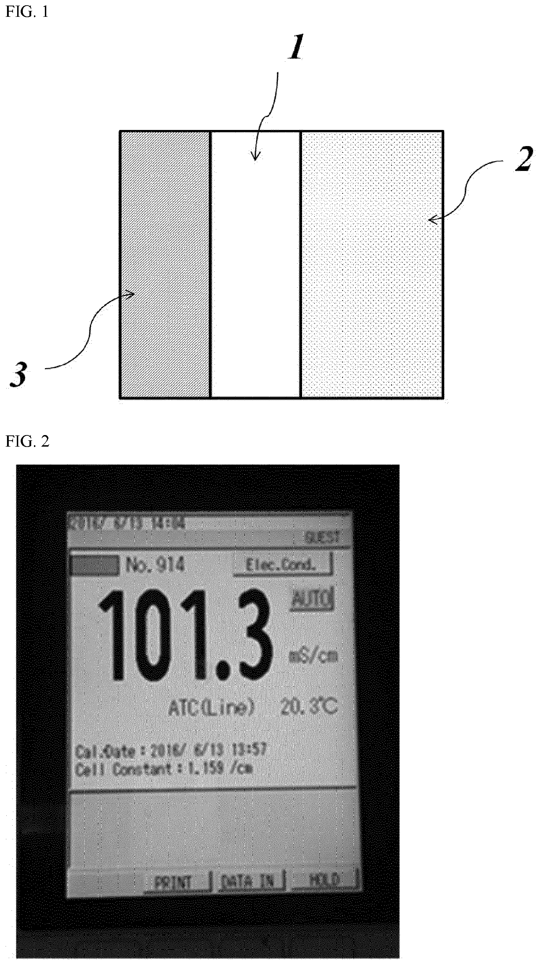

FIG. 1 is a diagram for describing a sulfur dioxide-based secondary battery including an electrolyte solution containing an iodide additive according to the present invention.

Referring to FIG. 1, a sulfur dioxide-based secondary battery according to the present invention includes a sulfur dioxide-based inorganic electrolyte solution 1 containing an iodide additive, a positive electrode 2, and a negative electrode 3.

Here, the sulfur dioxide-based inorganic electrolyte solution 1 includes a sulfur dioxide-based inorganic electrolyte (alkali metal salt-xSO₂) containing an alkali metal salt and sulfur dioxide, and is used as an electrolyte and a positive electrode active material. The sulfur dioxide-based inorganic electrolyte is an alkali metal ionic electrolyte.

The sulfur dioxide-based inorganic electrolyte solution 1 has a molar ratio (x) of a SO₂ content of 0.5 to 10 based on an alkali metal salt, and is preferably 1.5 to 3.0. When a molar ratio (x) of a SO₂ content is less than 1.5, ionic conductivity of an electrolyte decreases, and when a molar ratio (x) of a SO₂ content is greater than 3.0, vapor pressure of an electrolyte increases.

The alkali metal salt includes a sodium salt, a lithium salt, a potassium salt, and the like. For example, the sodium salt may be NaAlCl₄, NaGaCl₄, Na₂CuCl₄, Na₂MnCl₄, Na₂CoCl₄, Na₂NiCl₄, Na₂ZnCl₄, Na₂PdCl₄, and the like. Among these various sodium salts, NaAlCl₄ exhibits relatively excellent characteristics of a battery. The lithium salt may be LiAlCl₄, LiGaCl₄, LiBF₄, LiBCl₄, LiInCl₄, or the like. Also, the potassium salt may be KAlCl₄.

For example, the sulfur dioxide-based inorganic electrolyte solution 1 includes a NaAlCl₄-xSO₂ electrolyte. As a method of preparing NaAlCl₄-xSO₂, SO₂ gas is injected into a mixture of NaCl and AlCl₃ (or only a NaAlCl₄ salt) to prepare NaAlCl₄-xSO₂.

The sulfur dioxide-based inorganic electrolyte solution 1 according to the present invention further includes an iodide additive. As the iodide additive, NaI, LiI, and the like may be used. A content of the iodide additive is 0.001 to 0.5 M, preferably, 0.03 to 0.1 M. That is, this is because there is no significant difference in characteristics of an electrolyte solution in which an iodide additive is not added when a content of an iodide additive is less than 0.001 M, and on the other hand, improvement of energy efficiency, a long-life characteristic, and stability of a negative electrode may decrease when a content of an iodide additive is greater than 0.5 M.

As such, an iodide additive as a functional additive is added to the sulfur dioxide-based inorganic electrolyte solution 1, and as a result, a highly excellent characteristic such as ionic conductivity of about 100 mS/cm, which approaches that of an aqueous electrolyte solution, is exhibited as shown in FIG. 2. Here, FIG. 2 is an image illustrating ionic conductivity of an electrolyte solution containing NaI. In this case, a sulfur dioxide-based inorganic electrolyte solution is prepared by adding 50 mM NaI to NaAlCl₄-2SO₂.

The positive electrode 2 is composed of a porous carbon material. This positive electrode 2 provides a place where an oxidation-reduction reaction of a sulfur dioxide-based inorganic electrolyte occurs. In some cases, the carbon material constituting the positive electrode 2 may include one or two or more hetero elements. The hetero element refers to nitrogen (N), oxygen (O), boron (B), fluorine (F), phosphorus (P), sulfur (S), or silicon (Si). A content of the hetero element is 0 to 20 at%, and preferably 5 to 15 at%. When a content of the hetero element is less than 5 at%, there is only a slight increase in a capacity as a result of the addition of the hetero element, and when a content of the hetero element is 15 at% or more, electrical conductivity and ease of electrode molding of the carbon material decrease.

Also, the positive electrode 2 may further include one of a metal chloride, a metal fluoride, a metal bromide, and a metal oxide in addition to the porous carbon material.

Here, the metal chloride may include one or two or more of CuCl₂, CuCl, NiCl₂, FeCl₂, FeCl₃, CoCl₂, MnCl₂, CrCl₂, CrCl₃, VCl₂, VCl₃, ZnCl₂, ZrCl₄, NbCl₅, MoCl₃, MoCl₅, RuCl₃, RhCl₃, PdCl₂, AgCl, and CdCl₂. For example, the positive electrode 2 may include a porous carbon material and CuCl₂ in a predetermined weight ratio. When CuCl₂ is charged and discharged, a Cu oxidation number is changed and reaction with sodium ions occurs, and as a result, discharging products such as Cu and NaCl are obtained. Also, when charging is performed, CuCl₂ is reversibly re-formed. A content of the metal chloride in the positive electrode 2 may be 50 to 100 wt% or 60 to 99 wt%, and preferably 70 to 95 wt% for mixing with additional elements for improvement of characteristics of the positive electrode 2.

A metal fluoride may include one or two or more of CuF₂, CuF, NiF₂, FeF₂, FeF₃, CoF₂, CoF₃, MnF₂, CrF₂, CrF₃, ZnF₂, ZrF₄, ZrF₂, TiF₄, TiF₃, AgF₂, SbF₃, GaF₃, and NbF₅. For example, the positive electrode 2 may include a porous carbon material and CuF₂ in a predetermined weight ratio. When CuF₂ is charged and discharged, a Cu oxidation number is changed and reaction with sodium ions occurs, and as a result, discharging products such as Cu and NaCl are obtained. Also, when charging is performed, CuF₂ is reversibly re-formed. A content of the metal fluoride in the positive electrode 2 may be 50 to 100 wt% or 60 to 99 wt%, and preferably 70 to 95 wt% for mixing with additional elements for improvement of characteristics of the positive electrode 2.

A metal bromide may include one or two or more of CuBr₂, CuBr, NiBr₂, FeBr₂, FeBr₃, CoBr₂, MnBr₂, CrBr₂, ZnBr₂, ZrBr₄, ZrBr₂, TiBr₄, TiBr₃, NbBr₅, AgBr, SbBr₃, GaBr₃, BiBr₃, MoBr₃, SnBr₂, WBr₆, and WBr₅. For example, the positive electrode 2 may include a porous carbon material and CuBr₂ in a predetermined weight ratio. When CuBr₂ is charged and discharged, a Cu oxidation number is changed and reaction with sodium ions occurs, and as a result, discharging products such as Cu and NaCl are obtained. Also, when charging is performed, CuBr₂ is reversibly re-formed. A content of the metal bromide in the positive electrode 2 may be 50 to 100 wt% or 60 to 99 wt%, and preferably 70 to 95 wt% for mixing with additional elements for improvement of characteristics of the positive electrode 2.

The metal oxide may include one or two or more of CuO, V₂O₅, MnO₂, Fe₃O₄, Co₃O₄, and NiO. In the positive electrode 2, a content of the metal oxide may be 70 to 90 wt%.

As the negative electrode 3, a material containing sodium or lithium may be used.

For example, a sodium-containing material used as a material of the negative electrode 3 may include a sodium metal, an alloy containing sodium, an intermetallic compound containing sodium, a carbon material containing sodium, or an inorganic material containing sodium. The inorganic material includes an oxide, a sulfide, a phosphide, a nitride, a fluoride, or the like.

For example, when the alkali metal salt of the sulfur dioxide-based inorganic electrolyte solution 1 is a lithium salt (LiAlCl₄), the negative electrode 3 may include a carbon-based material, a Si-based, Sn-based, Al-based, P-based, Zn-based, Ga-based, Ge-based, Ag-based, In-based, Sb-based, or Bi-based metal, an alloy, an oxide, or a sulfide.

When the alkali metal salt of the sulfur dioxide-based inorganic electrolyte solution 1 is a sodium salt (NaAlCl₄), the negative electrode 3 may include a carbon-based material, a Sn-based, Al-based, P-based, Zn-based, Ga-based, Ge-based, Ag-based, In-based, Sb-based, or Bi-based metal, an alloy, an oxide, or a sulfide.

In addition, a lithium-containing material used as a material of the negative electrode 3 may include a lithium metal, an alloy containing lithium, an intermetallic compound containing lithium, a carbon material containing lithium, an inorganic material containing lithium, or the like. The inorganic material may include at least one of an oxide, a sulfide, a phosphide, a nitride, and a fluoride. A content of a negative electrode material in the negative electrode 3 may be 60 to 100 wt%.

In this case, the sulfur dioxide-based inorganic electrolyte solution 1 used as an electrolyte and a positive electrode active material includes a lithium salt and sulfur dioxide (SO₂). The sulfur dioxide-based inorganic electrolyte solution 1 has a molar ratio (x) of a SO₂ content of 0.5 to 10, preferably, 1.5 to 6 based on a lithium salt. When a molar ratio (x) of a SO₂ content is less than 1.5, ionic conductivity of an electrolyte decreases, and when a molar ratio (x) of a SO₂ content is greater than 6, vapor pressure of an electrolyte increases. As a lithium salt, LiAlCl₄, LiGaCl₄, LiBF₄, LiBCl₄, LiInCl₄, or the like may be used. Among these various lithium salts, LiAlCl₄ exhibits relatively excellent characteristics of a battery. As a method of preparing LiAlCl₄-xSO₂, SO₂ gas is injected into a mixture of LiCl and AlCl₃ (or only a LiAlCl₄ salt) to prepare LiAlCl₄-xSO₂.

As such, the sulfur dioxide-based secondary battery according to the present invention may exhibit improved energy efficiency, a long-life characteristic, and stability of a negative electrode by adding an iodide additive to a sulfur dioxide-based inorganic electrolyte solution.

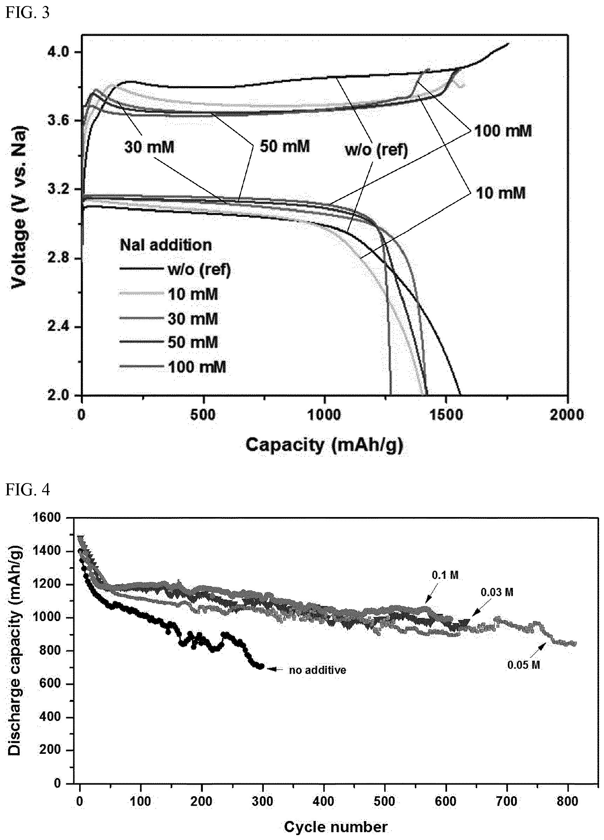

Electrochemical characteristics of the sulfur dioxide-based secondary battery including an electrolyte solution containing an iodide additive according to the present invention will be described with reference to FIGS. 3 to 6 as follows.

Here, as sulfur dioxide-based inorganic electrolyte solutions according to a comparative example and examples, NaAlCl₄-2SO₂ was used as a standard electrolyte solution.

As an electrolyte solution according to a comparative example, the standard electrolyte solution in an original condition was used without the addition of an iodide additive. As electrolyte solutions according to examples, electrolyte solutions prepared by adding 10, 30, 50, and 100 mM NaI to a standard electrolyte solution, respectively, were used.

In addition, a porous carbon material was used as a positive electrode, and a sodium metal was used as a negative electrode.

FIG. 3 is a graph illustrating the charging and discharging curves of sulfur dioxide-based secondary batteries according to examples and a comparative example.

Referring to FIG. 3, it can be seen that charge/discharge energy efficiency in examples in which NaI was added was significantly improved compared to a comparative example in which NaI as an additive was not added. For example, it can be seen that energy efficiency in a comparative example in which an additive was not added was 76%, but when 0.1 M NaI was added, energy efficiency was increased to 85%.

FIG. 4 is a graph illustrating a lifetime characteristic of sulfur dioxide-based secondary batteries according to examples and a comparative example.

Referring to FIG. 4, as a result of evaluating a lifetime characteristic of sulfur dioxide-based secondary batteries according to examples and a comparative example, it can be seen that a lifetime characteristic in examples in which NaI was added was significantly improved even beyond 800 cycles compared to a comparative example in which NaI was not added.

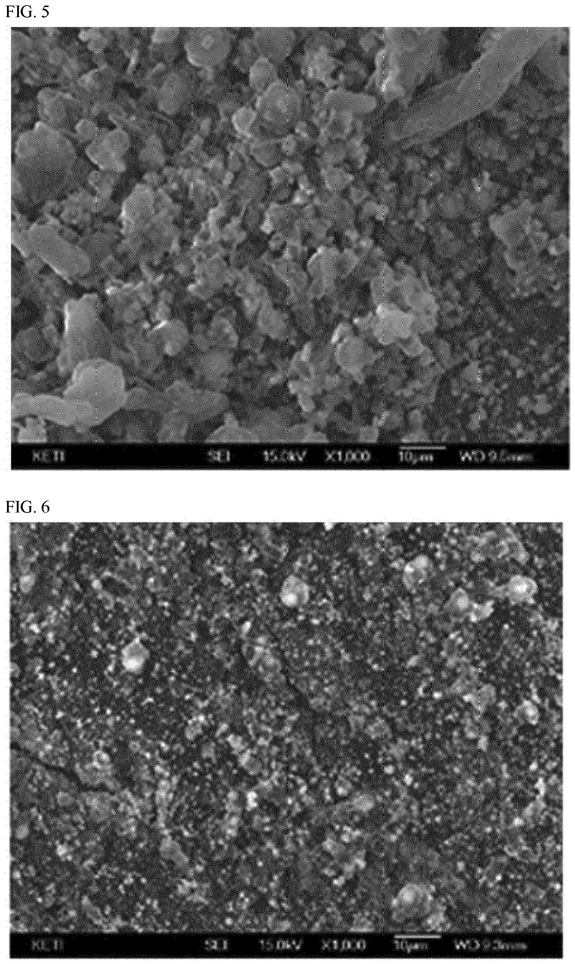

FIG. 5 is an image illustrating an electrodeposited form of a negative electrode in a sulfur dioxide-based secondary battery according to a comparative example. Also, FIG. 6 is an image illustrating an electrodeposited form of a negative electrode in a sulfur dioxide-based secondary battery according to an example.

Referring to FIG. 5, an electrodeposited form, in which a crystalline phase in various shapes is exhibited, was observed in the negative electrode made of a sodium metal according to a comparative example.

On the other hand, referring to FIG. 6, an electrodeposited form, in which a planar two-dimensional shape is maintained, was observed in the negative electrode made of a sodium metal according to an example.

Such an electrodeposited form of the negative electrode according to examples is a very desirable characteristic for improving the short circuit risk of the battery and the lifetime reversal efficiency, and thus is considered to significantly contribute to the improvement of the performance of the sulfur dioxide-based secondary battery according to the present invention.

The embodiments disclosed in this specification and drawings are only examples to help understanding of the invention and the invention is not limited there to. It is clear to those skilled in the art that various modifications based on the technological scope of the invention in addition to the embodiments disclosed herein can be made.

The present invention relates to an electrolyte solution containing an iodide additive, and a sulfur dioxide-based secondary battery including the same. An electrolyte solution for a sulfur dioxide-based secondary battery according to the present invention includes sulfur dioxide (SO₂), an alkali metal salt, and an iodide additive. An iodide additive is added to an electrolyte solution, and thus energy efficiency, a long-life characteristic, and stability of a negative electrode of a sulfur dioxide-based secondary battery can be improved.

### [List of Reference Numerals]

- 1:: sulfur dioxide-based inorganic electrolyte solution
- 2:: positive electrode
- 3:: negative electrode

## Claims

1. An electrolyte solution for a sulfur dioxide-based secondary battery, the electrolyte solution comprising sulfur dioxide (SO₂), an alkali metal salt, and an iodide additive.

2. The electrolyte solution for a sulfur dioxide-based secondary battery according to claim 1, wherein the iodide additive is NaI or LiI.

3. The electrolyte solution for a sulfur dioxide-based secondary battery according to claim 1, wherein a content of the iodide additive is 0.001 to 0.5 M.

4. The electrolyte solution for a sulfur dioxide-based secondary battery according to claim 1, wherein a content of the iodide additive is 0.03 to 0.1 M.

5. The electrolyte solution for a sulfur dioxide-based secondary battery according to claim 1, wherein the sulfur dioxide and the alkali metal salt are included as NaAlCl₄-xSO₂ (1.5≤x≤3.0) or LiAlCl₄-xSO₂ (1.5≤x≤3.0).

6. A sulfur dioxide-based secondary battery comprising an electrolyte solution containing sulfur dioxide (SO₂), an alkali metal salt, and an iodide additive.

7. A sulfur dioxide-based secondary battery, comprising:
a negative electrode containing sodium or lithium;
a positive electrode containing a carbon material; and
an electrolyte solution containing sulfur dioxide (SO₂), an alkali metal salt, and an iodide additive.

8. The sulfur dioxide-based secondary battery according to claim 7, wherein the iodide additive is NaI or LiI.

9. The sulfur dioxide-based secondary battery according to claim 7, wherein a content of the iodide additive is 0.001 to 0.5 M.

10. The sulfur dioxide-based secondary battery according to claim 7, wherein a content of the iodide additive is 0.03 to 0.1 M.

11. The sulfur dioxide-based secondary battery according to claim 7, wherein the sulfur dioxide and the alkali metal salt are included as NaAlCl₄-xSO₂ (1.5≤x≤3.0) or LiAlCl₄-xSO₂ (1.5≤x≤3.0).

12. The sulfur dioxide-based secondary battery according to claim 7, wherein the negative electrode is a sodium metal or a lithium metal.
